# EUROPEAN PATENT APPLICATION

(11) **EP 3 961 781 A1**
(43) Date of publication of application: **02.03.2022**
(21) Application number: 21192968.2
(22) Date of filing: 25.08.2021
(51) Int. Cl.: H01M 10/052, H01M 10/0562, H01M 50/449, H01M 50/46, H01M 50/48

(54) **ALL-SOLID SECONDARY BATTERY**

(30) Priority: 27.08.2020 KR 20200108436
(71) Applicant: Samsung SDI Co., Ltd., Yongin-si, Gyeonggi-do 17084 (KR)
(72) Inventor: Lee, Minsuk, 17084 Yongin-si, Gyeonggi-do (KR); Kim, Hongjeong, 17084 Yongin-si, Gyeonggi-do (KR); Ryu, Younggyoon, 17084 Yongin-si, Gyeonggi-do (KR); Yoon, Jaegu, 17084 Yongin-si, Gyeonggi-do (KR)
(74) Representative: Gulde & Partner

(57) **Abstract**

An all-solid secondary battery includes: a cathode layer; an anode layer; a solid electrolyte layer disposed between the cathode layer and the anode layer; and an inactive member disposed on a thickness side of the cathode layer, wherein the cathode layer includes a cathode current collector and a cathode active material layer disposed on the cathode current collector, the anode layer includes an anode current collector and a first anode active material layer disposed on the anode current collector, the inactive member includes a multilayer structure, and the multilayer structure includes an adhesive layer and a support layer.

## Description

### BACKGROUND

### 1. Field

One or more aspects of embodiments of the present disclosure relate to an all-solid secondary battery.

### 2. Description of the Related Art

Recently, batteries having high energy density and high safety have been actively developed in accordance with industrial demand. For example, lithium-ion batteries have been put to practical use in the automotive field as well as in information-related equipment and communication equipment. In the field of automobiles, safety and reliability are particularly important due to its association driver and traffic safety.

Currently available lithium-ion batteries in the art use an electrolyte solution including a flammable (e.g., inflammable) organic solvent, and thus, there is a risk of overheating and/or fire when a short-circuit occurs. Accordingly, an all-solid secondary battery utilizing a solid electrolyte instead of an electrolyte solution has been proposed.

An all-solid battery does not utilize a flammable organic solvent, and thus has a reduced risk of fire and/or explosion even when a short-circuit occurs. Therefore, such an all-solid secondary battery may be much safer than a lithium-ion battery utilizing an electrolyte solution.

### SUMMARY

One or more aspects of embodiments of the present disclosure are directed toward an all-solid secondary battery having a novel structure.

The present invention provides an all-solid secondary battery as defined in claim 1. Additional aspects of some embodiments will be set forth in the description that follows or will be defined in the dependent claims..

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a cross-sectional view of an all-solid secondary battery according to an embodiment;
FIG. 2 is a cross-sectional view of an all-solid secondary battery according to another embodiment;
FIG. 3 is a cross-sectional view of a cathode layer of an all-solid secondary battery according to an embodiment; and
FIG. 4 is a schematic view showing part of the inside of an all-solid secondary battery according to an embodiment.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described below, by referring to the drawings, to explain aspects of the present description. As used herein, the term "and/or" includes any and all combinations of one or more of the associated listed items. Expressions such as "at least one of," "one of," and "selected from," when preceding a list of elements, modify the entire list of elements and do not modify the individual elements of the list.

As used herein, the terms "use," "using," and "used" may be considered synonymous with the terms "utilize," "utilizing," and "utilized," respectively. Further, the use of "may" when describing embodiments of the present disclosure refers to "one or more embodiments of the present disclosure".

Spatially relative terms, such as "beneath," "below," "lower," "above," "upper," "bottom," "top," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

Because an all-solid secondary battery uses a solid electrolyte, resistance in the battery increases when the contact between a cathode layer and a solid electrolyte layer and/or the contact between an anode layer and the solid electrolyte layer are not sufficiently maintained, thus making it difficult to realize a battery with excellent or suitable battery characteristics.

In order to improve the contact between the anode layer and the solid electrolyte layer, a process of manufacturing the all-solid secondary battery involves a pressing task (e.g., a pressing step). In the pressing step, there may be a pressure difference in different planar regions of the stack of a cathode layer, an anode layer, and a solid electrolyte layer, for example in partially unstacked parts (e.g., parts where one or more elements are not present along a thickness direction of the stack), and micro-defects in one or more elements, for example the solid electrolyte layer, may occur due to the pressure difference. Cracks are generated from such defects and may grow in the solid electrolyte layer during charging/discharging of the all-solid secondary battery. As lithium grows through these cracks, a short-circuit may occur between the cathode layer and the anode layer.

One or more aspects of embodiments of the present disclosure provide an all-solid secondary battery having a novel structure, thus preventing or reducing a short-circuit during charging/discharging of the battery and/or having improved cycle characteristics.

Hereinafter, the present disclosure will now be described more fully with reference to the accompanying drawings, in which example embodiments are shown. The present disclosure may, however, be embodied in many different forms, should not be construed as being limited to the embodiments set forth herein; rather, these embodiments are provided so that this present disclosure will be thorough and complete, and will fully convey the effects and features of the present disclosure and ways to implement the present disclosure to those skilled in the art. The present disclosure should be construed as including all modifications, equivalents, and alternatives within the scope of the present disclosure.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, tasks, steps, operations, elements, components, and/or groups thereof. The symbol"/" used herein may be interpreted as "and" or "or" according to the context.

In the drawings, the thicknesses of layers and regions are exaggerated or reduced for clarity. Throughout the specification, while the terms "first", "second", etc., may be utilized herein to describe one or more suitable constituent elements, these components should not be limited by these terms. These terms are utilized only to distinguish one component from another, not for purposes of limitation.

Hereinafter, embodiments of an all-solid secondary battery and a method of preparing the all-solid secondary battery will be described in more detail.

### All-solid secondary battery

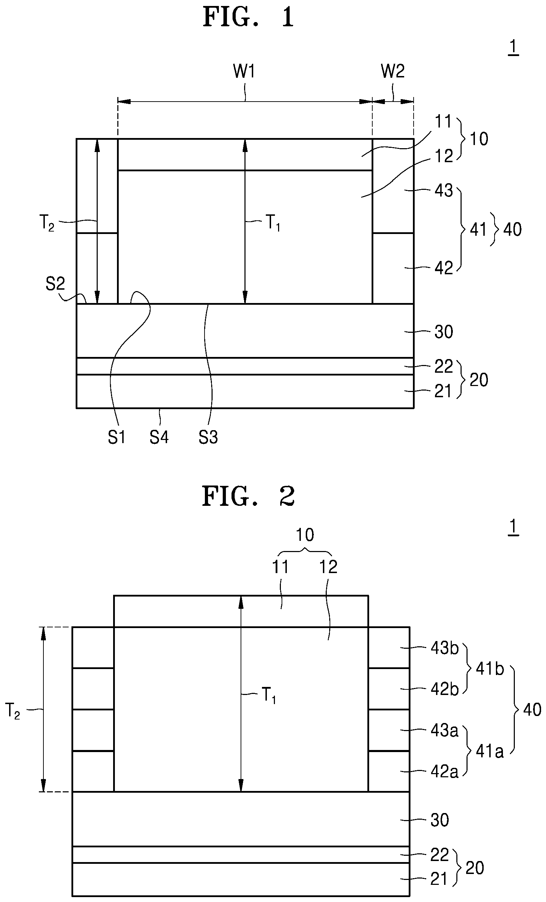

An all-solid secondary battery according to an embodiment includes: a cathode layer; an anode layer; a solid electrolyte layer disposed between the cathode layer and the anode layer; and an inactive member disposed on a side (e.g., at least one thickness side) of the cathode layer, wherein the cathode layer includes a cathode current collector and a cathode active material layer disposed on the cathode current collector, the anode layer includes an anode current collector and a first anode active material layer disposed on the anode current collector, and the inactive member includes a multilayer structure, where the multilayer structure includes an adhesive layer and a support layer. As used herein, the term "thickness side" refers to a side (e.g., left or right side as depicted in FIG. 1, and the equivalent sides on the front and back surfaces) of the layer that is congruent with a plane substantially parallel to the thickness direction of the battery stack. Because the inactive layer is disposed on a side of the cathode layer and has the multilayer structure, and the multilayer structure includes the adhesive layer and the support layer, cracks in the solid electrolyte layer, which may occur during pressing and/or charging/discharging of the all-solid secondary battery, may be suppressed or reduced. Therefore, cracks in the solid electrolyte layer may be suppressed or reduced during charging/discharging of the all-solid secondary battery, and thus a short circuit of the all-solid secondary battery may be suppressed or reduced. As a result, the all-solid secondary battery may have improved cycle characteristics.

Referring to FIGS. 1 to 4, an all-solid secondary battery 1 includes: a cathode layer 10; an anode layer 20; a solid electrolyte layer 30 disposed between the cathode layer 10 and the anode layer 20; and an inactive member 40 disposed on a side of the cathode layer 10, wherein the cathode layer 10 includes a cathode current collector 11 and a cathode active material layer 12 disposed on the cathode current collector 11, the anode layer 20 includes an anode current collector 21 and a first anode active material layer 22 disposed on the anode current collector 21, and the inactive member 40 includes a multilayer structure 41 (41a, 41b), and the multilayer structure includes an adhesive layer 42 (42a, 42b) and a support layer 43 (43a, 43b).

### Cathode layer

### Cathode layer: inactive member

The cathode layer 10 includes the cathode current collector 11 and the cathode active material layer 12 disposed on the cathode current collector 11. The inactive member 40 is disposed on a side of the cathode layer 10, the inactive member 40 includes a multilayer structure 41 (41a, 41b), and the multilayer structure 41 (41a, 41b) includes an adhesive layer 42 (42a, 42b) and a support layer 43 (43a, 43b). The inactive member 40 is disposed on the side of the cathode active material layer 12 and/or the cathode current collector 11.

By the inclusion of the inactive member 40, cracks in the solid electrolyte layer 30 may be prevented or reduced during the manufacture and/or charging/discharging of the all-solid secondary battery 1, and consequently, the all-solid secondary battery 2 may have improved cycle characteristics. In an all-solid secondary battery in the related art that does not include the inactive member 40, non-uniform pressing (e.g., non-uniform pressure) exerted on the solid electrolyte layer 30 in contact with the cathode layer 10 during the manufacture and/or charging/discharging of the all-solid secondary battery may cause cracks in the solid electrolyte layer 30, with a higher likelihood of the occurrence of a short circuit being caused by the cracks.

Due to the inactive member 40 including the multilayer structure 41 (41a, 41b), which includes the adhesive layer 42 (42a, 42b) and the support layer 43 (43a, 43b), cracks in the solid electrolyte layer 30 may be prevented or reduced during the manufacture and/or charging/discharging of the all-solid secondary batter 1, and consequently, the all-solid secondary battery 1 may have improved cycle characteristics. In comparison with a single-layer structure, the multilayer structure 41 (41a, 41b) concurrently (e.g., simultaneously) provides support and adhesion to the cathode layer 10 and the solid electrolyte layer 30, and thus, can more effectively prevent or reduce deterioration of the all-solid secondary battery 1.

The multilayer structure 41 (41a, 41b) includes the adhesive layer 42 (42a, 42b) and the support layer 43 (43a, 43b), and the adhesive layer 42 (42a, 42b) effectively prevents or reduces a gap between the cathode layer 10 and the solid electrolyte layer 30, which may be caused due to a volume change of the cathode layer during charging/discharging of the all-solid secondary battery 1, and provides adhesion between the support layer 43 (43a, 43b) and another layer, thus improving the film strength of the inactive member 40, e.g., the multilayer structure 41 (41a, 41b). The support layer 43 (43a, 43b) provides support to the multilayer structure 41 (41a, 41b), prevents or reduces exertion of non-uniform pressure on the solid electrolyte layer 20 during a press process or charging/discharging process, and prevents shape deformation of the manufactured all-solid secondary battery 1.

The inactive member 40 includes at least one multilayer structure. The number of the multilayer structures 41 (41a, 41b) included in the inactive member 40 may be, for example, 1 to 100, 1 to 50, 1 to 40, 1 to 30, 1 to 20, or 1 to 10. The larger the number (multiplicity) of the multilayer structures 41 (41a, 41b) in the inactive member 40, the greater the film strength of the inactive member 40 becomes, and thus, exertion of non-uniform pressure on the solid electrolyte layer 30 during a pressing or charging/discharging process may be more effectively prevented or reduced. Referring to FIG. 2, the inactive member 40 includes a first multilayer structure 41a and a second multilayer structure 41b, the first multilayer structure 41a includes a first adhesive layer 42a and a first support layer 43a, and the second multilayer structure 41b includes a second adhesive layer 42b and a second support layer 43b.

The thickness of the adhesive layer 42 (42a, 42b) and/or the thickness of the support layer 43 (43a, 43b) included in the multilayer structure 41 (41a, 41b) may each independently be about 90% or less of a total thickness of the multilayer structure 41 (41a, 41b). The thickness of the adhesive layer 42 (41a, 42b) and/or the thickness of the support layer 43 (43a, 43b) included in the multilayer structure 41 (41a, 41b) may each independently be about 10% to about 90%, about 15% to about 85%, about 20% to about 80%, about 25% to about 75%, about 30% to about 70%, about 40% to about 60%, or about 45% to about 55% of the total thickness of the multilayer structure 41 (41a, 41b). When the thickness of the adhesive layer 42 (42a, 42b) or the thickness of the support layer 43 (43a, 43b) included in the multilayer structure 41 (41a, 41b) is within these ranges, the multilayer structure 41 (41a, 41b) may provide stable support and adhesion to the entirety of the cathode layer 10.

The thickness (T2) of the inactive member 40 may be equal to or smaller than the thickness (T1) of the cathode layer 10. When the thickness (T2) of the inactive member 40 is smaller than or equal to the thickness (T1) of the cathode layer 10, the cathode layer 10 and the solid electrolyte layer 30 may be in sufficiently close contact with each other, and thus, interfacial resistance between the cathode layer 10 and the solid electrolyte layer 30 may be reduced.

Referring to FIG. 1, in some embodiments the thickness (T2) of the inactive member may be substantially the same as the thickness (T1) of the cathode layer 10. When the thickness (T2) of the inactive member is substantially the same as the thickness (T1) of the cathode layer 10, substantially uniform pressure may be exerted on the solid electrolyte layer 30 during the manufacture or charging/discharging of the all-solid secondary battery 1, and thus, cracks in the solid electrolyte layer 30 may be suppressed or reduced, and a consequent short circuit of the all-solid secondary battery 1 may be prevented or reduced.

Referring to FIG. 2, in some embodiments the thickness (T2) of the inactive member 40 may be smaller than the thickness (T1) of the cathode layer 10. For example, the thickness (T2) of the inactive member 40 may be smaller than the thickness (T1) of the cathode layer 10, and may be equal to the thickness of the cathode active material layer 12. In some embodiments, the thickness (T2) of the inactive member 40 may be smaller than the thickness (T1) of the cathode layer 10, and may be larger than the thickness of the cathode active material layer 12. In some embodiments, the thickness (T2) of the inactive member 40 may be smaller than the thickness (T1) of the cathode layer 10, and may also be smaller than the thickness of the cathode active material layer 12.

When the thickness (T2) of the inactive member 40 is larger than the thickness (T1) of the cathode layer 10, pressure may not be properly applied to the cathode layer 10 in the process of manufacturing the all-solid secondary battery 1, and thus the solid electrolyte layer 30 in contact with the cathode layer 10 is not sufficiently pressed. Thus, the interfacial resistance between the cathode layer 10 and the solid electrolyte layer 30 may increase, and consequently, cycle characteristics of the all-solid secondary battery 1 may deteriorate.

The thickness (T2) of the inactive member 40 may be, for example, about 30% to about 100%, about 30% to 99%, about 40% to about 98%, about 50% to about 97%, about 50% to about 95%, or about 50% to about 90% of the thickness (T1) of the cathode layer 10. When the thickness (T2) of the inactive member 40 is too small, the effect of arranging the inactive member 40 may be insignificant. When the thickness (T2) of the inactive member 40 is larger than the thickness (T1) of the cathode layer 10, the solid electrolyte layer 30 in contact with the cathode layer 10 may not be sufficiently pressed as described above.

The inactive member 40 may include at least one selected from a lithium-ion insulator and a lithium-ion conductor. The inactive member 40 may be an electronic insulator. For example, the inactive member 40 may not be an electronic conductor. In some embodiments, the inactive member 40 may be an ionic insulator. For example, the inactive member 40 may not be an ionic conductor. The inactive member 40 may include, for example, an organic material, an inorganic material, or an organic-inorganic composite material. The organic material may be, for example, a polymer. The inorganic material may be, for example, a ceramic (such as a metal oxide). The organic-inorganic composite material may be a composite of a polymer and a metal oxide. The adhesive layer 42 (42a, 42b) may include, for example, an organic material, and the support layer 43 (43a, 43b) may include, for example, at least one selected from an organic material and an inorganic material. The adhesive layer 42 (42a, 42b) may include, for example, a curable polymer. The curable polymer may be a polymer that is curable by heat and/or pressure. The curable polymer may be, for example, a solid at room temperature. The adhesive layer 42 (42a, 42b) may include, for example, a heat-and-press curable film and/or a cured product thereof. The heat-and-press curable film may be, for example, TSA-66 of Toray Industries, Inc. The support layer 43 (43a, 43b) may include, for example, at least one selected from paper, an insulating polymer, an ion-conductive polymer, an insulating inorganic material, an oxide-based solid electrolyte, and a sulfide-based solid electrolyte. The insulating polymer may be, for example, an olefin-based polymer (such as polypropylene (PP) and/or polyethylene (PE)).

The density of the support layer 43 (43a, 43b) may be, for example, about 10% to about 200%, about 10% to about 150%, about 10% to about 140%, about 10% to about 130%, or about 10% to about 120% of the density of the cathode active material included in the cathode active material layer 12. The density of the support layer 43 (43a, 43b) may be, for example, about 90% to about 110% of the density of the cathode active material included in the cathode active material layer 12. In some embodiments, the density of the support layer 43 (43a, 43b) may be, for example, substantially the same as the density of the cathode active material included in the cathode active material layer 12. The density of the support layer 43 (43a, 43b) may be, for example, about 10% to about 200%, about 10% to about 150%, about 10% to about 140%, about 10% to about 130%, or about 10% to about 120% of the density of the solid electrolyte included in the solid electrolyte layer 30. The density of the support layer 43 (43a, 43b) may be, for example, about 90% to about 110% of the density of the solid electrolyte included in the solid electrolyte layer 30. In some embodiments, the density of the support layer 43 (43a, 43b) may be, for example, substantially the same as the density of the solid electrolyte included in the solid electrolyte layer 30.

The inactive member 40 does not include (e.g., may exclude) a material having electrochemical activity, e.g., an electrode active material. The term "electrode active material" refers to a material capable of absorbing/desorbing lithium. The inactive member 40 may include or be formed of any suitable material utilized in the art, other than electrode active materials.

The inactive member 40 is on two or more, and for example all thickness sides (e.g., surrounds the side) of the cathode layer 10, and contacts the solid electrolyte layer 30 (e.g., around a perimeter of the cathode layer 10 at the interface between the cathode layer 10 and the solid electrolyte layer 30). Because the inactive member 40 is on (e.g., surrounds) side surfaces of the cathode layer 10 and contacts the solid electrolyte layer 30, cracks in the solid electrolyte layer 30, which may occur during a process of pressing the solid electrolyte layer 30 in regions not in contact with the cathode layer 20, may be effectively suppressed or reduced.

Referring to FIGS. 1 to 4, the inactive member 40 extends from the side of the cathode layer 30 to a distal end portion (e.g., perimeter) of the solid electrolyte layer 30 (e.g., covers all regions of the surface of the solid electrolyte layer 30 facing the cathode layer 10 that are not in contact with the cathode layer 10). Because the inactive member 40 extends to the distal end portion of the solid electrolyte layer 30, cracks at the distal end portion of the solid electrolyte layer 30 may be suppressed or reduced. The distal end portion of the solid electrolyte layer 30 is the outermost portion in contact with the side (e.g., thickness side) of the solid electrolyte layer 30. For example, the inactive member 40 extends to the outermost portion in contact with the side of the solid electrolyte layer 30. In some embodiments, the inactive member 40 is spatially separated from (e.g., is not in direct contact with) the anode layer 20, for example, from the first anode active material layer 22. Therefore, the inactive member 40 extends to the distal end portion of the solid electrolyte layer 30, but does not contact the anode layer 20. The inactive member 40 is, for example, a filler element for filling a space extending from the side of the cathode layer 30 to the distal end portion of the solid electrolyte layer 30.

Referring to FIGS. 1 and 2, the width (W2) of the inactive member 40 extending from the side of the cathode layer 10 to the distal end portion of the solid electrolyte layer 30 may be about 1% to about 30%, about 1% to 25%, about 1% to about 20%, about 1% to about 15%, about 1% to about 10%, or about 1% to about 5% of the width (W1) of the cathode layer 10. When the width (W2) of the inactive member 40 is too large, the energy density of the all-solid secondary battery 1 may be reduced. When the thickness (T2) of the inactive member 40 is too small, the effect of including the inactive member 40 may be insignificant.

The area (S1) of the cathode layer 10 may be smaller than the area (S3) of the solid electrolyte layer 30 contacting the cathode layer 10, and the inactive member 40 may be disposed to surround the side of the cathode layer 10, thus making up the difference in area between the cathode layer 10 and the solid electrolyte layer 30. Because the area (S2) of the inactive member 40 makes up the difference in area between the area (S1) of the cathode layer 10 and the area (S3) of the solid electrolyte layer 30, cracks in the solid electrolyte layer 30, which may occur due to a pressure difference during a pressing process, may be effectively suppressed or reduced. For example, a sum of the area (S1) of the cathode layer 10 and the area (S2) of the inactive member 40 may be substantially equal to the area (S3) of the solid electrolyte layer 30.

The area (S1) of the cathode layer 10 may be less than about 100%, about 99% or less, about 98% or less, about 97% or less, about 96% or less, about 85% or less, or about 93% or less of the area (S3) of the solid electrolyte layer 30. For example, the area (S1) of the cathode layer 10 may be less than about 50% to about 100%, about 50% to about 99%, about 55% to about 98%, about 60% to about 97%, about 70% to about 96%, about 80% to about 95%, or about 85% to about 95% of the area (S3) of the solid electrolyte layer 30.

When the area (S1) of the cathode layer 10 is equal to or larger than the area (S3) of the solid electrolyte layer 30, the risk of short circuit occurring from physical contact of the cathode layer 10 with the first anode active material layer 22 and/or from lithium overcharge may increase. The area (S1) of the cathode layer 10 may be, for example, equal to the area of the cathode active material layer 12. The area (S1) of the cathode layer 10 may be, for example, equal to the area of the cathode current collector 11.

The area (S2) of the inactive member 40 may be about 50% or less, about 40% or less, about 30% or less, about 20% or less, or about 10% or less of the area (S1) of the cathode layer 10. For example, the area (S3) of the inactive member 40 may be about 1% to about 50%, about 5% to about 40%, about 5% to about 30%, about 5% to about 20%, or about 5% to about 15% of the area (S1) of the cathode layer 10.

The area (S1) of the cathode layer 10 may be smaller than the area (S4) of the anode current collector 21. For example, the area (S1) of the cathode layer 10 may be less than 100%, about 99% or less, about 98% or less, about 97% or less, about 96% or less, about 85% or less, or about 93% or less of the area (S4) of the anode current collector 21. For example, the area (S1) of the cathode layer 10 may be about 50% to less than 100%, about 50% to about 99%, about 55% to about 98%, about 60% to about 97%, about 70% to about 96%, about 80% to about 95%, or about 85% to about 95% of the area (S4) of the anode current collector 21. The area (S4) of the anode current collector 21 may be, for example, equal to the area of the anode layer 20. The area (S4) of the anode current collector 21 may be, for example, the same as the area of the first anode active material layer 22.

As utilized herein, the "same" or "equal" area, length, width, and/or shape include cases having "substantially same" area, length, width, and/or shape, except where the area, length, width, and/or shape are intentionally made to be different. The "same" area, length, and/or width refers to that the difference in area, length, and/or width between objects compared with each other may be, for example, less than about 1%, less than about 0.5%, or less than about 0.1%.

The inactive member 40 may be or function as, for example, a gasket. When a gasket is utilized as the inactive member 40, cracks in the solid electrolyte layer 30 that occur due to a pressure difference during a press process may be effectively prevented or reduced. The inactive member 40 may be, for example, a multilayer gasket.

### Cathode layer: cathode active material

The cathode active material layer 12 includes, for example, a cathode active material and a solid electrolyte. The solid electrolyte included in the cathode layer 10 may be similar to or different from the solid electrolyte included in the solid electrolyte layer 30. For details of the solid electrolyte, the description of the solid electrolyte layer 30 as provided above may be referred to.

The cathode active material is a cathode active material capable of reversibly absorbing and desorbing lithium ions. The cathode active material may be, for example, a lithium transition metal oxide (such as a lithium cobalt oxide (LCO), a lithium nickel oxide, a lithium nickel cobalt oxide, a lithium nickel cobalt aluminum oxide (NCA), a lithium nickel cobalt manganese oxide (NCM), a lithium manganite, and/or a lithium iron phosphate); a nickel sulfide; a copper sulfide; a lithium sulfide; an iron oxide; or a vanadium oxide, but embodiments are not limited thereto, and any material available as a cathode active material in the art may be utilized. These cathode active materials may be utilized alone or in a combination of at least two thereof.

The lithium transition metal oxide may be, for example, a compound represented by one of the following formula: LiₐA_{1-b}B'_{b}D₂ (wherein 0.90 ≤ a ≤ 1, and 0 ≤ b ≤ 0.5); LiₐE_{1-b}B'_{b}O_{2-c}D_{c} (wherein 0.90 ≤ a ≤ 1, 0 ≤ b ≤ 0.5, and 0 ≤ c ≤ 0.05); LiE₂-_{b}B'_{b}O_{4-c}D_{c} (wherein 0 ≤ b ≤ 0.5 and 0 ≤ c ≤ 0.05); LiₐNi_{1-b-c}Co_{b}B'_{c}D_{α} (wherein 0.90 ≤ a ≤ 1, 0 ≤ b ≤ 0.5, 0 ≤ c ≤ 0.05, and 0 < α ≤ 2); LiₐNi_{1-b-c}Co_{b}B'_{c}O_{2-α}F'_{α} (wherein 0.90 ≤ a ≤ 1, 0 ≤ b ≤ 0.5, 0 ≤ c ≤ 0.05, and 0 < α < 2); LiₐNi_{1-b-c}Co_{b}B'_{c}O_{2-α}F'₂ (wherein 0.90 ≤ a ≤ 1, 0 ≤ b ≤ 0.5, 0 ≤ c ≤ 0.05, and 0 < α < 2); LiₐNi_{1-b-c}Mn_{b}B'_{c}D_{α} (wherein 0.90 ≤ a ≤ 1, 0 ≤ b ≤ 0.5, 0 ≤ c ≤ 0.05, and 0 < α ≤ 2); LiₐNi_{1-b-c}Mn_{b}B'_{c}O_{2-α}F'_{α} (wherein 0.90 ≤ a ≤ 1, 0 ≤ b ≤ 0.5, 0 ≤ c ≤ 0.05, and 0 < α < 2); LiₐNi_{1-b-c}Mn_{b}B'_{c}O₂₋ₐF'₂ (wherein 0.90 ≤ a ≤ 1, 0 ≤ b ≤ 0.5, 0 ≤ c ≤ 0.05, and 0 < α < 2); LiₐNi_{b}E_{c}G_{d}O₂ (wherein 0.90 ≤ a ≤ 1, 0 ≤ b ≤ 0.9, 0 ≤ c ≤ 0.5, and 0.001 ≤ d ≤ 0.1); LiₐNi_{b}Co_{c}Mn_{d}GₑO₂ (wherein 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (wherein 0.90 ≤ a ≤ 1 and 0.001 ≤ b ≤ 0.1); LiₐCoG_{b}O₂ (wherein 0.90 ≤ a ≤ 1 and 0.001 ≤ b ≤ 0.1); LiₐMnG_{b}O₂ (wherein 0.90 ≤ a ≤ 1 and 0.001 ≤ b ≤ 0.1); LiₐMn₂G_{b}O₄ (wherein 0.90 ≤ a ≤ 1 and 0.001 ≤ b ≤ 0.1); QO₂; QS₂; LiQS₂; V₂O₅; LiV₂O₅; Lil'O₂; LiNiVO₄; Li_{(3-f)}J₂(PO₄)₃ (wherein 0 ≤ f ≤ 2); Li_{(3-f)}Fe₂(PO₄)₃ (wherein 0 ≤ f ≤ 2); and LiFePO₄. In the formulae above, A may be nickel (Ni), cobalt (Co), manganese (Mn), or a combination thereof; B' may be aluminum (Al), nickel (Ni), cobalt (Co), manganese (Mn), chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; E may be cobalt (Co), manganese (Mn), or combination thereof; F' may be fluorine (F), sulfur (S), phosphorus (P), or a combination thereof; G may be aluminum (Al), chromium (Cr), manganese (Mn), iron (Fe), magnesium (Mg), lanthanum (La), cerium (Ce), strontium (Sr), vanadium (V), or a combination thereof; Q may be titanium (Ti), molybdenum (Mo), manganese (Mn), or a combination thereof; I' may be chromium (Cr), vanadium (V), iron (Fe), scandium (Sc), yttrium (Y), or a combination thereof; and J may be vanadium (V), chromium (Cr), manganese (Mn), cobalt (Co), nickel (Ni), copper (Cu), or a combination thereof. The compounds may each independently have a surface coating layer (hereinafter, also referred to as "coating layer"). In some embodiments, a mixture of a compound without a coating layer and a compound having a coating layer, the compounds being selected from the compounds listed above, may be utilized. The coating layer on the surface of such compounds may include, for example, at least one compound of a coating element selected from the group consisting of oxide, hydroxide, oxyhydroxide, oxycarbonate, and hydroxycarbonate of the coating element. The compounds for the coating layer may be amorphous and/or crystalline. The coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. The coating layer may be formed utilizing any method that does not adversely affect the physical properties of the cathode active material. A coating method for forming the coating layer may be, for example, a spray coating method or a dipping method. The coating methods may be well understood by one of ordinary skill in the art, and thus a detailed description thereof will not be provided.

The cathode active material may include, for example, a lithium salt of a transition metal oxide that has a layered rock-salt structure among the lithium transition metal oxides listed above. For example, the term "layered rock-salt structure" refers to a structure in which an oxygen atom layer and a metal atom layer are alternately and regularly disposed in the <111 > direction in a cubic rock-salt structure, where each of the atom layers forms a two-dimensional flat plane. The "cubic rock-salt structure" refers to a sodium chloride (NaCI) type crystalline structure, in which face-centered cubic (fcc) lattices respectively formed of anions and cations are shifted by only a half of the ridge of each unit lattice. The lithium transition metal oxide having the layered rock-salt structure may be, for example, a ternary lithium transition metal oxide (such as LiNiₓCo_{y}Al_{z}O₂ (NCA) or LiNiₓCo_{y}Mn_{z}O₂ (NCM), wherein 0 < x < 1, 0 < y < 1, 0 < z < 1, and x + y + z = 1). When the cathode active material includes a ternary transition metal oxide having the layered rock-salt structure, the all-solid secondary battery 1 may have further improved energy density and/or thermal stability.

The cathode active material may be covered by a coating layer as described above. The coating layer may be any suitable coating layer in the art for cathode active materials of all-solid secondary batteries. The coating layer may be, for example, Li₂O-ZrO₂ (LZO).

When the cathode active material includes a ternary lithium transition metal oxide including nickel (Ni) (such as NCA or NCM), a capacity density of the all-solid secondary battery 1 increases, and thus metal elution from the cathode active material in a charged state may be reduced. As a result, the all-solid secondary battery 1 according to an embodiment may have improved cycle characteristics in a charged state.

The cathode active material may be in the form of particles having, for example, a spherical shape and/or an elliptical shape. A particle diameter of the cathode active material is not particularly limited but may be in a range applicable to a cathode active material of an all-solid secondary battery of the related art. An amount of the cathode active material of the cathode 10 is not particularly limited and may be in a range applicable to a cathode layer of an all-solid secondary battery of the related art.

### Cathode layer: solid electrolyte

The cathode active material layer 12 may include, for example, a solid electrolyte (e.g., particles of a solid electrolyte). The solid electrolyte in the cathode layer 10 may be the same as or different from the solid electrolyte in the solid electrolyte layer 30. For details of the solid electrolyte, the description of the solid electrolyte layer 30 as provided above may be referred to.

The solid electrolyte (e.g., particles of the solid electrolyte) in the cathode active material layer 12 may have a D50 average particle diameter smaller than that of the solid electrolyte in the solid electrolyte layer 30. For example, the D50 average particle diameter of the solid electrolyte in the cathode active material layer 12 may be about 90% or less, about 80% or less, about 70% or less, about 60% or less, about 50% or less, about 40% or less, about 30% or less, or about 20% or less of the D50 average particle diameter of the solid electrolyte in the solid electrolyte layer 30.

The D50 average particle diameter is, for example, a median particle diameter (D50). The median particle diameter (D50) is, for example, a particle size at which 50% of particles are smaller in the cumulative volume distribution of particle sizes, as measured by a laser diffraction method.

### Cathode layer: binder

The cathode active material layer 12 may include a binder. The binder may be or include, for example, styrene-butadiene rubber (SBR), polytetrafluoroethylene, polyvinylidene fluoride, polyethylene, and/or the like, but embodiments are not limited thereto, and any material available as a binder in the art may be possible.

### Cathode layer: conducting agent

The cathode active material layer 12 may include a conducting agent. The conducting agent may be or include, for example, graphite, carbon black, acetylene black, Ketjen black, carbon fibers, metal powder, and/or the like, but embodiments are not limited thereto, and any conducting agent available in the art may be possible.

### Cathode layer: other additives

The cathode active material layer 12 may further include one or more additives (such as a filler, a coating agent, a dispersant, an ion-conductive auxiliary agent, and/or the like) in addition to the cathode active material, solid electrolyte, binder, and/or conductive agent described above.

The filler, coating agent, dispersant, and/or ion- conductive auxiliary agent that may be included in the cathode active material layer 12 may be suitable materials in the art for an electrode of an all-solid secondary battery.

### Cathode layer: cathode current collector

The cathode current collector 11 may utilize, for example, a plate or a foil consisting of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In some embodiments, the cathode current collector 11 may not be provided. A thickness of the cathode current collector 11 may be, for example, about 1 µm to about 100 µm, about 1 µm to about 50 µm, about 5 µm to about 25 µm, or about 10 µm to about 20 µm.

### Solid electrolyte layer

### Solid electrolyte layer: Solid electrolyte

Referring to FIGS. 1 to 4, the solid electrolyte layer 30 includes a solid electrolyte disposed between the cathode layer 10 and the anode layer 20.

The solid electrolyte may be, for example, a sulfide-based solid electrolyte. The sulfide-based solid electrolyte may be, for example, at least one selected from Li₂S-P₂S₅, Li₂S-P₂S₅-LiX (wherein X is a halogen element), Li₂S-P₂S₅-Li₂O, Li₂S-P₂S₅-Li₂O-Lil, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-Lil, Li₂S-B₂S₃, Li₂S-P₂S₅-ZₘSₙ (wherein m and n each are a positive number of 1 to 10), and Z is one of Ge, Zn, and Ga), Li₂S-GeS₂, Li₂S-SiS₂-Li₃PO₄, Li₂S-SiS₂-LiₚMO_{q} (wherein p and q each are a positive number of 1 to 10, and M is one of P, Si, Ge, B, Al, Ga, or In), Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ, (wherein 0≤x≤2). For example, the sulfide-based solid electrolyte may be prepared by treatment of a starting material (such as Li₂S, P₂S₅, and/or the like) utilizing melt quenching or mechanical milling. In some embodiments, after the treatment, the resultant may be heat-treated. The solid electrolyte may be amorphous or crystalline, or may be a mixed form thereof. In some embodiments, the solid electrolyte may be, for example, one of the sulfide-based solid electrolyte materials described above, including at least sulfur (S), phosphorus (P), and lithium (Li), as constituent elements. For example, the solid electrolyte may be a material including Li₂S-P₂S₅. When a material including Li₂S-P₂S₅ is utilized as a sulfide-based solid electrolyte material for forming the solid electrolyte, a mixing molar ratio of Li₂S and P₂S₅ (Li₂S:P₂S₅) may be, for example, in a range of from about 50:50 to about 90:10.

For example, the sulfide-based solid electrolyte may include an argyrodite-type (e.g., argyrodite-based) solid electrolyte represented by Formula 1.

Formula 1 Li⁺₁₂₋ₙ₋ₓAⁿ⁺X²⁻₆₋ₓY⁻ₓ.

In Formula 1, A may be P, As, Ge, Ga, Sb, Si, Sn, Al, In, Ti, V, Nb, and/or Ta, X may be S, Se, and/or Te, Y may be CI, Br, I, F, CN, OCN, SCN, and/or N₃, 1≤n≤5, and 0≤x≤2. The sulfide-based solid electrolyte may be, for example, an argyrodite-type compound including at least one selected from Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ (wherein 0≤x≤2). The sulfide-based solid electrolyte may be an argyrodite-type compound including at least one selected from Li₆PS₅Cl, Li₆PS₅Br, and Li₆PS₅I.

A density of the argyrodite-type solid electrolyte may be about 1.5 g/cc to about 2.0 g/cc. As the argyrodite-type solid electrolyte has a density of about 1.5 g/cc or higher, the internal resistance of the all-solid secondary battery may decrease, and Li penetration into the solid electrolyte layer may be effectively suppressed or reduced.

### Solid electrolyte layer: binder

The solid electrolyte layer 30 may include, for example, a binder. The binder in the solid electrolyte layer 30 may be styrene-butadiene rubber (SBR), polytetrafluoroethylene, polyvinylidene fluoride, polyethylene, and/or the like, but embodiments are not limited thereto, and any material available as a binder in the art may be utilized. The binder of the solid electrolyte layer 30 may be the same as or different from the binder in the cathode active material layer 12 and the binder in the anode active material layer 22. In some embodiments, the binder may not be provided.

An amount of the binder in the solid electrolyte layer 30 may be about 0 to about 10 wt%, 0 to about 5 wt%, 0 to about 3 wt%, 0 to about 1 wt%, 0 to 0.5 wt%, or 0 to about 0.1 wt%, with respect to the total weight of the solid electrolyte layer 30.

### Anode layer

### Anode layer: anode active material

The first anode active material layer 22 may include, for example, an anode active material and a binder.

The anode active material in the first anode active material layer 22 may be, for example, in the form of particles. An average particle diameter of the anode active material may be, for example, about 4 µm or less, about 3 µm or less, about 2 µm or less, about 1 µm or less, or about 900 nm or less. An average particle diameter of the anode active material may be, for example, about 10 nm to about 4 µm or less, about 10 nm to about 3 µm or less, about 10 nm to about 2 µm or less, about 10 nm to about 1 µm or less, or about 10 nm to about 900 nm or less. When the average particle diameter of the anode active material is within these ranges, reversible absorbing and/or desorbing of lithium during charging/discharging may further be facilitated. The average particle diameter of the anode active material may be, for example, a median diameter (D50) that is measured by utilizing a laser diffraction particle diameter distribution meter.

The anode active material in the first anode active material layer 22 may include, for example, at least one selected from a carbonaceous anode active material and a metal or metalloid anode active material.

For example, the carbonaceous anode active material may be amorphous carbon. The amorphous carbon may be, for example, carbon black (CB), acetylene black (AB), furnace black (FB), ketjen black (KB), or graphene, but embodiments are not limited thereto, and any material classified as amorphous carbon in the art may be utilized. The amorphous carbon, which is carbon having little crystallinity or a very low crystallinity, is different from crystalline carbon or graphite-based carbon.

The metal or metalloid anode active material may include at least one selected from the group consisting of gold (Au), platinum (Pt), palladium (Pd), silicon (Si), silver (Ag), aluminum (Al), bismuth (Bi), tin (Sn), and zinc (Zn), but embodiments are not limited thereto. Any material available in the art as a metal anode active material or metalloid anode active material capable of forming an alloy or compound with lithium may be utilized. For example, nickel (Ni) does not form an alloy with lithium, and thus, is not a metal anode active material.

The first anode active material layer 22 may include one of the anode active materials listed above, or may include a mixture of a plurality of different anode active materials selected from the anode active materials. For example, the first anode active material layer 22 may include only amorphous carbon, or may include at least one metal selected from the group consisting of gold (Au), platinum (Pt), palladium (Pd), silicon (Si), silver (Ag), aluminum (Al), bismuth (Bi), tin (Sn), and zinc (Zn). In other embodiments, the first anode active material layer 22 may include a mixture of amorphous carbon with at least one selected from the group consisting of gold (Au), platinum (Pt), palladium (Pd), silicon (Si), silver (Ag), aluminum (Al), bismuth (Bi), tin (Sn), and zinc (Zn). A mixing ratio of the mixture of amorphous carbon to the metal (e.g., gold) may be, for example, by weight%, about 10:1 to about 1:2, about 5:1 to about 1:1, or about 4:1 to about 2:1, but embodiments are not limited to these ranges, and the mixing ratio may be selected according to required characteristics of the all-solid secondary battery 1. As the anode active material has a composition within the above ranges, the cycle characteristics of the all-solid secondary battery 1 may further be improved.

The anode active material in the first anode active material layer 22 may include, for example, a mixture of first particles including (e.g., consisting of) amorphous carbon with second particles including (e.g., consisting of) a metal or a metalloid. Examples of the metal or metalloid may include gold (Au), platinum (Pt), palladium (Pd), silicon (Si), silver (Ag), aluminum (Al), bismuth (Bi), tin (Sn), and/or zinc (Zn). In other words, the metalloid is a semiconductor. An amount of the second particles may be about 8 wt% to about 60 wt%, about 10 wt% to about 50 wt%, about 15 wt% to about 40 wt%, or about 20 wt% to about 30 wt%, with respect to the total weight of the mixture. As the amount of the second particles is within these ranges, for example, the cycle characteristics of the all-solid secondary battery 1 may be further improved.

### Anode layer: binder

The binder in the first anode active material layer 22 may be or include styrene-butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like, but embodiments are not limited thereto. Any material available as a binder in the art may be utilized. The binder may include (e.g., consist of) a single binder or a plurality of different binders.

By the inclusion of the binder in the first anode active material layer 22, the first anode active material layer 22 may be stabilized on the anode current collector 21. Accordingly, in spite of a volume change and/or relative location change of the first anode active material layer 22 during charging/discharging, cracks in the first anode active material layer 22 may be suppressed or reduced. For example, when the first anode active material layer 22 does not include a binder, the first anode active material layer 22 may be easily separated from the anode current collector 21. When the first anode active material layer 22 is separated from the anode current collector 21, an exposed portion of the anode current collector 21 may contact the solid electrolyte layer 30, and thus, a short circuit is more likely to occur. The first anode active material layer 22 may be manufactured by, for example, coating, on the anode current collector 21, a slurry of dispersed materials constituting the first anode active material layer 22, and drying the coated slurry. As the first anode active material layer 22 includes a binder, the anode active material may be stably dispersed in the slurry. For example, when the slurry is coated on the anode current collector 21 by utilizing a screen printing method, clogging of the screen (e.g., clogging by an aggregate of the anode active material) may be suppressed or reduced.

### Anode layer: other additives

The first anode active material layer 22 may further include additives that are utilized in an all-solid secondary battery (such as a filler, a coating agent, a dispersant, and/or an ion-conductive auxiliary agent).

### Anode layer: first anode active material layer

A thickness of the first anode active material layer 22 may be, for example, about 50% or less, about 40% or less, about 30% or less, about 20% or less, about 10% or less, or about 5% or less of the thickness of the cathode active material layer 12. For example, a thickness of the first anode active material layer 22 may be about 1 µm to about 20 µm, about 2 µm to about 10 µm, or about 3 µm to about 7 µm. When the thickness of the first anode active material layer 22 is too small (e.g., too thin), the first anode active material layer 22 may disintegrate due to lithium dendrites formed between the first anode active material layer 22 and the anode current collector 21, and thus, the cycle characteristics of the all-solid secondary battery 1 may not be improved. When the thickness of the first anode active material layer 22 is too large (e.g., too thick), the energy density of the all-solid secondary battery 1 may deteriorate and the internal resistance of the all-solid secondary battery 1 due to the first anode active material layer 22 may increase, and thus the cycle characteristics of the all-solid secondary battery 1 may not be improved.

For example, when the thickness of the first anode active material layer 22 decreases, the charge capacity of the first anode active material layer 22 may also decrease. A charge capacity of the first anode active material layer 22 may be, for example, about 50% or less, about 40% or less, about 30% or less, about 20% or less, about 10% or less, about 5% or less, or about 2% or less of the charge capacity of the cathode active material layer 12. The charge capacity of the first anode active material layer 22 may be, for example, about 0.1% to about 50%, about 0.1% to about 40%, about 0.1% to about 30%, about 0.1% to about 20%, about 0.1% to about 10%, about 0.1% to about 5%, or about 0.1% to about 2% of the charge capacity of the cathode active material layer 22. When the charge capacity of the first anode active material layer 22 is too small, due to the very small thickness of the first anode active material layer 22, the first anode active material layer 22 may disintegrate due to the lithium dendrites formed between the first anode active material layer 22 and the anode current collector 21 during repeated charging and discharging processes, and thus, the cycle characteristics of the all-solid secondary battery 1 may not be improved. When the charge capacity of the first anode active material layer 22 excessively increases, the energy density of the all-solid secondary battery 1 may deteriorate and the internal resistance of the all-solid secondary battery 1 due to the first anode active material layer 22 may increase, and thus, the cycle characteristics of the all-solid secondary battery 1 may not be improved.

The charge capacity of the cathode active material layer 12 may be obtained by multiplying the charge capacity density (mAh/g) of the cathode active material by the mass of the cathode active material in the cathode active material layer 12. When the cathode active material includes (e.g., consists of) two or more types (kinds) of materials, a charge capacity density of each of the cathode active materials may be multiplied by the respective weights thereof, and the total of the multiplication values corresponds to the charge capacity of the cathode active material layer 12. The charge capacity of the first anode active material layer 22 may be calculated in substantially the same manner. For example, the charge capacity of the first anode active material layer 22 is obtained by multiplying the charge capacity density (mAh/g) of the anode active material by the mass of the anode active material in the first anode active material layer 22. When the anode active material includes (e.g., consists of) two or more types (kinds) of materials, a charge capacity density of each of the anode active material layers may be multiplied by the respective weights thereof, and the total of the multiplication values corresponds to the charge capacity of the anode active material layer 22. Here, the charge capacity densities of the cathode active material and the anode active material are estimated capacities obtained from an all-solid half-cell utilizing lithium metal as a counter electrode. For example, the charge capacities of the cathode active material layer 12 and the first anode active material layer 22 are directly measured by charge capacity measurement utilizing an all-solid half-cell. Each of the measured charge capacities is divided by the mass of the corresponding active material to obtain a charge capacity density. In some embodiments, the charge capacities of the cathode active material 12 and the first anode active material layer 22 may be the initial charge capacities measured during charging of the 1st cycle.

### Anode layer: second anode active material layer

In some embodiments, the all-solid secondary battery 1 may further include a second anode active material layer formed between the anode current collector 21 and the first anode active material layer by charging. The second anode active material layer may be a metal layer including lithium or a lithium alloy. The metal layer may include lithium and/or a lithium alloy. Because the second anode active material layer is a metal layer including lithium, the second anode active material layer may serve as a lithium reservoir. Examples of the lithium alloy may include a Li-AI alloy, a Li-Sn alloy, a Li-In alloy, a Li-Ag alloy, a Li-Au alloy, a Li-Zn alloy, a Li-Ge alloy, and/or a Li-Si alloy, but embodiments are not limited thereto, and any material available as a lithium alloy in the art may be utilized. The second anode active material layer may include (e.g., consist of) one of these alloys or lithium, or may include (e.g., consist of) one or more suitable alloys.

A thickness of the second anode active material layer may be, for example, about 1 µm to about 1000 µm, about 1 µm to about 500 µm, about 1 µm to about 200 µm, about 1 µm to about 150 µm, about 1 µm to about 100 µm, or about 1 µm to about 50 µm, but embodiments are not limited thereto. When the thickness of the second anode active material layer is too small, the second anode active material layer may not serve as a lithium reservoir. When the thickness of the second anode active material layer is too large, the mass and volume of the all-solid secondary battery 1 may increase, and the cycle characteristics thereof may rather be deteriorated. The second anode active material layer may be, for example, a metal foil having a thickness in the ranges described above.

For example, the second anode active material layer of the all-solid secondary battery 1 may be disposed between the anode current collector 21 and the first anode active material layer 22 before assembly of the all-solid secondary battery 1, or may be deposited between the anode current collector 21 and the first anode active material layer 22 by charging after assembly of the all-solid secondary battery 1. When the second anode active material layer is disposed between the anode current collector before assembly of the all-solid secondary battery 1, the second anode active material layer, as a metal layer including lithium, may serve as a lithium reservoir. For example, a lithium foil may be disposed between the anode current collector 21 and the first anode active material layer 22 before assembly of the all-solid secondary battery 1. The all-solid secondary battery 1 including the second anode active material layer may have further improved cycle characteristics. When the second anode active material layer is deposited by charging after assembly of the all-solid secondary battery 1, the energy density of the all-solid secondary battery 1 increases because the second anode active material layer is not included at the time of assembly of the all-solid secondary battery 1. For example, the all-solid secondary battery 1 may be charged over the charge capacity of the first anode active material layer 22. For example, the first anode active material layer 22 may be overcharged. At the initial stage of charging, lithium may be absorbed into the first anode active material layer 22. The anode active material in the first anode active material layer 22 may form an alloy or compound with lithium ions that are migrated from the cathode layer 10. When charging is performed over the capacity of the first anode active material layer 22, for example, lithium may be deposited at the back surface of the first anode active material 22, e.g., between the anode current collector 21 and the first anode active material layer 22, and a metal layer corresponding to the second anode active material layer is formed of the deposited lithium. The second anode active material layer is a metal layer mainly consisting of lithium (e.g., metallic lithium). This results because, for example, the anode active material in the first anode active material layer 22 includes (e.g., consists of) a material capable of forming an alloy or compound with lithium. During discharging, lithium of the first anode active material layer 22 and the second anode active material layer 24, e.g., a metal layer, may be ionized and may migrate toward the cathode layer 10. Thus, lithium can be utilized as an anode active material in the all-solid secondary battery 1. In some embodiments, because the first anode active material layer 22 covers the second anode active material layer, the first anode active material layer 22 serves as a protection layer for the second anode active material layer, e.g., a metal layer, and at the same time, suppresses deposition growth of lithium dendrite. Thus, a short circuit and capacity deterioration of the all-solid secondary battery 1 may be suppressed or reduced, and, as a result, cycle characteristics of the all-solid secondary battery 1 may be improved. When the second anode active material layer is formed by charging after assembly of the all-solid secondary battery 1, the anode current collector 21, the first anode active material layer 22, and a region therebetween may be, for example, Li-free regions substantially not including lithium (Li) in the initial state or a discharged state of the all-solid secondary battery 1.

### Anode layer: anode current collector

For example, the anode current collector 21 may include (e.g., consist of) a material that does not react with lithium, e.g., a material that forms neither an alloy nor a compound. The material for the anode current collector 21 may be, for example, copper (Cu), stainless steel, titanium (Ti), iron (Fe), cobalt (Co), nickel (Ni), and/or the like, but embodiments are not limited thereto, and any material available as an electrode current collector in the art may be utilized. The anode current collector 21 may include (e.g., consist of) one of the metals listed above, or may include (e.g., consist of) an alloy or a coating material of at least two of the metals. The anode current collector 21 may be, for example, in the form of a plate or a foil.

The all-solid secondary battery 1 may further include, for example, a thin film on the anode current collector 21, the thin film including an element capable of forming an alloy with lithium. The thin film may be disposed between the anode current collector 21 and the first anode active material layer 22. For example, the thin film may include an element capable of forming an alloy with lithium. The element capable of forming an alloy with lithium may be gold, silver, zinc, tin, indium, silicon, aluminum, bismuth, and/or the like, but embodiments are not limited thereto, and any element capable of forming an alloy with lithium in the art may be utilized. The thin film may include (e.g., consist of) one of these metals or an alloy of at least two of these metals. By the arrangement of the thin film on the anode current collector 21, the second anode active material layer deposited, for example, between the thin film 24 and the first anode active material layer 22, may have a more even form, and thus, the cycle characteristics of the all-solid secondary battery 1 may be further improved.

A thickness of the thin film may be, for example, about 1 nm to about 800 nm, about 10 nm to about 700 nm, about 50 nm to about 600 nm, or about 100 nm to about 500 nm. When the thickness of the thin film is less than 1 nm, the thin film may not properly function. When the thickness of the thin film is too large, the thin film itself absorbs lithium, and the amount of deposition of lithium in the anode may decrease, and thus, the energy density of the all-solid secondary battery 1 may be reduced, and the cycle characteristics of the all-solid secondary battery 1 may be deteriorated. The thin film may be disposed on the anode current collector 21 by utilizing, for example, vacuum deposition, sputtering, and/or plating, but embodiments are not limited to thereto, and any method suitable in the art capable of forming a thin film may be utilized.

One or more embodiments will now be described in more detail with reference to examples. However, these examples are only for illustrative purposes.

### Example 1: Two-layer structure member of adhesive layer (25 µm)/paper (50 µm), and plate press

### Preparation of anode layer

A Ni foil having a thickness of about 10 µm was prepared as an anode current collector. Also, carbon black (CB) having a primary particle diameter of about 30 nm and silver (Ag) particles having an average particle diameter of about 60 nm were prepared as anode active materials.

4 g of a mixed powder of CB and Ag particles in a weight ratio of 3:1 was put into a container, and 4 g of a N-methyl-2-pyrrolidone (NMP) solution including 7 wt% of a polyvinylidene fluoride (PVDF) binder (#9300 available from Kureha) was added thereto to prepare a mixed solution. Then, while adding NMP gradually in small portions, the mixed solution was stirred to prepare a slurry. The prepared slurry was coated on a SUS sheet utilizing a bar coater and dried in the air at 80 °C for 10 minutes to obtain a stack. The stack thus obtained was vacuum-dried at 40 °C for 10 hours. The dried stack was roll-pressed under a pressure of 300 MPa for 10 ms to planarize the surface of a first anode active material layer of the stack. Through the processes described above, an anode layer was prepared. A first anode active material layer in the anode layer had a thickness of about 7 µm. The area of the first anode active material layer and the area of the anode current collector were the same.

### Preparation of cathode layer

LiNi_{0.8}Co_{0.15}Mn_{0.05}O₂ (NCM) coated with Li₂O-ZrO₂ (LZO) was prepared as a cathode active material. The LZO-coated cathode active material was prepared according to the method disclosed in Korean Patent Publication No. 10-2016-0064942. Li₆PS₅Cl (D50 = 0.5 µm, crystalline), an argyrodite-type crystalline material, was prepared as a solid electrolyte. A polytetrafluoroethylene (PTFE) binder (Teflon binder available from DuPont) was prepared as a binder. Carbon nanofibers (CNFs) were prepared as a conducting agent. The cathode active material, the solid electrolyte, the conducting agent, and the binder in a weight ratio of about 84: 11.5: 3: 1.5 were mixed with a xylene solvent to prepare a mixture, and then, the mixture was molded into a sheet form and then vacuum-dried at 40 °C for about 8 hours to prepare a cathode sheet. The cathode sheet was attached by pressing onto a surface of the cathode current collector composed of a carbon-coated aluminum foil having a thickness of 18 µm to prepare a cathode layer. The cathode layer had a thickness of about 105 µm. The area of the first anode active material layer and the area of the anode current collector were the same.

### Preparation of solid electrolyte layer

1.5 parts by weight of an acrylic binder was added to 98.5 parts by weight of a Li₆PS₅Cl solid electrolyte (D50 = 3.0 µm, crystalline) as an argyrodite-type crystal material, to prepare a mixture. Octyl acetate was added to the prepared mixture with stirring to prepare a slurry. The slurry was coated on non-woven fabric by utilizing a bar coater and dried in the air at a temperature of 80 °C for 10 minutes to obtain a stack. The obtained stack was vacuum-dried at 80 °C for 6 hours. Through the processes described above, a solid electrolyte layer was prepared.

### Manufacture of all-solid secondary battery

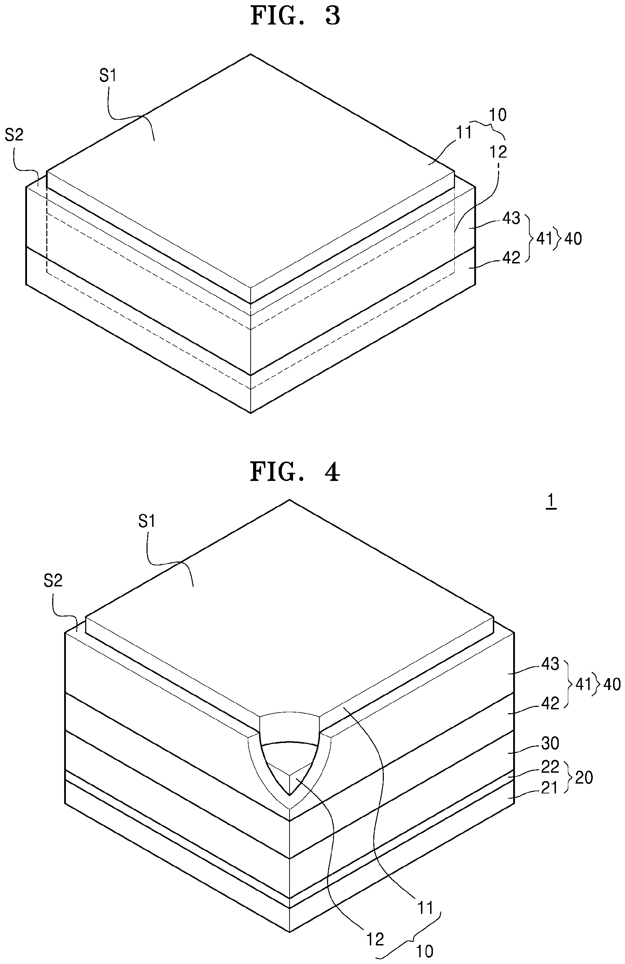

Referring to FIG. 4, the solid electrolyte layer was disposed on the anode layer to contact the first anode active material layer, and the cathode layer was disposed on the solid electrolyte layer. A gasket was disposed to surround the cathode layer and contact the solid electrolyte layer, thereby preparing a stack. The gasket had a thickness of about 75 µm. An inactive member in the form of a multilayer structure in which copy paper (thickness: 50 µm) was disposed on a heat-and-press curable adhesive sheet (Toray TSA-66, thickness: 25 µm) was utilized as the gasket. The gasket was disposed such that the heat-and-press curable adhesive sheet contacted the solid electrolyte layer. The cathode layer was disposed at a central portion of the solid electrolyte layer, and the gasket was disposed to surround the cathode layer and extend to a distal end portion of the solid electrolyte layer. The area of the cathode layer was about 90% of the area of the solid electrolyte layer, and the gasket was disposed over the remaining 10% of the area of the solid electrolyte layer in which the cathode layer was not disposed.

The prepared stack was plate-pressed under a pressure of 500 MPa at 85 °C for 30 min. By this pressing, the solid electrolyte layer was sintered, thus improving battery characteristics. The sintered solid electrolyte layer had a thickness of about 45 µm. The Li₆PS₅Cl solid electrolyte as an argyrodite-type crystal material in the sintered solid electrolyte layer had a density of 1.6 g/cc. The area of the solid electrolyte layer was the same as the area of the anode layer.

The pressed stack was put into a pouch and vacuum-sealed to manufacture an all-solid secondary battery. Parts of the cathode current collector and the anode current collector were made to protrude out of the sealed battery and utilized as a cathode layer terminal and an anode layer terminal, respectively.

### Example 2: Two-layer structure member of adhesive layer (25 µm)/solid electrolyte layer (50 µm), and plate press

An all-solid secondary battery was manufactured in substantially the same manner as in Example 1, except that an inactive member in the form of a multilayer structure in which a Li₆PS₅Cl solid electrolyte layer (thickness: 50 µm) was disposed on a heat-and-press curable adhesive sheet (Toray TSA-66, thickness: 25 µm) was utilized as the gasket.

The solid electrolyte layer was prepared in substantially the same manner as applied to prepare the solid electrolyte layer of Example 1, and disposed on the heat-and-press curable adhesive sheet.

### Example 3: Four-layer structure member of adhesive layer (25 µm)/copy paper (25 µm)/adhesive layer (25 µm)/copy paper (25 µm), and plate press

An all-solid secondary battery was manufactured in substantially the same manner as in Example 1, except that an inactive member including a first multilayer structure with copy paper (thickness: 25 µm) disposed on a heat-and-press curable adhesive sheet (Toray TSA-66, thickness: 25 µm) and a second multilayer structure thereon having substantially the same structure as the first multilayer structure was utilized as the gasket. The gasket had a four-layer structure of adhesive layer (25 µm)/copy paper (25 µm)/adhesive layer (25 µm)/copy layer (25 µm).

### Example 4: Four-layer structure member of adhesive layer (25 µm)/solid electrolyte layer (25 µm)/adhesive layer (25 µm)/solid electrolyte layer (25 µm), and plate press

An all-solid secondary battery was manufactured in substantially the same manner as in Example 1, except that an inactive member including a first multilayer structure with a Li₆PS₅Cl solid electrolyte layer (thickness: 25 µm) disposed on a heat-and-press curable adhesive sheet (Toray TSA-66, thickness: 25 µm), and a second multilayer structure thereon having substantially the same structure as the first multilayer structure was utilized as the gasket. The gasket had a four-layer structure of adhesive layer (25 **µm)/solid** electrolyte layer (25 µm)/adhesive layer (25 **µm)/solid** electrolyte layer (25 µm). The solid electrolyte layer was disposed on the heat-and-press curable adhesive sheet in substantially the same manner as applied in the manufacture of the solid electrolyte layer of Example 1.

### Example 5: Four-layer structure member of adhesive layer (25 µm)/copy paper (25 µm)/adhesive layer (25 µm)/copy paper (25 µm), and roll press

An all-solid secondary battery was manufactured in substantially the same manner as in Example 3, except that roll press was performed instead of plate press. The roll press was performed under a pressure of 500 MPa at a temperature of 85 °C for 1 min.

### Example 6: Four-layer structure of adhesive layer (25 µm)/solid electrolyte layer (25 µm)/adhesive layer (25 µm)/solid electrolyte layer (25 µm), and roll press

An all-solid secondary battery was manufactured in substantially the same manner as in Example 3, except that roll press was performed instead of plate press. The roll press was performed under a pressure of 500 MPa at a temperature of 85 °C for 1 min.

### Comparative Example 1: Gasket member-free, and plate press

An all-solid secondary battery was manufactured in substantially the same manner as in Example 1, except that a gasket was not utilized to manufacture the all-solid secondary battery.

### Comparative Example 2: Gasket member-free, and roll press

An all-solid secondary battery was manufactured in substantially the same manner as in Example 1, except that a gasket was not utilized and roll press was utilized instead of plate press, to manufacture the all-solid secondary battery. The roll press was performed under a pressure of 500 MPa at a temperature of 85 °C for 1 min.

### Comparative Example 3: Single-layer structure of solid electrolyte layer (120 µm), and plate press

An all-solid secondary battery was manufactured in substantially the same manner as in Example 1, except that an inactive member in the form of a single-layer structure having a Li₆PS₅Cl solid electrolyte layer (thickness: 120 µm) disposed therein was utilized as the gasket.

The solid electrolyte layer was prepared in substantially the same manner as applied in the manufacture of the solid electrolyte layer of Example 1.

### Comparative Example 4: Single-layer structure member of paper (100 µm), and plate press

An all-solid secondary battery was manufactured in substantially the same manner as in Example 1, except that an inactive member in the form of a single-layer structure having copy paper (thickness: 100 µm) disposed therein was utilized as the gasket.

### Comparative Example 5: Single-layer structure member of polymer film (100 µm), and plate press

An all-solid secondary battery was manufactured in substantially the same manner as in Example 1, except that an inactive member in the form of a single-layer structure having a non-adhesive polymer film (polyethylene film, Brown film, Thickness: 100 µm) disposed therein was utilized as the gasket.

### Evaluation Example 1: Charge and discharge test

Charge and discharge characteristics of the all-solid secondary batteries manufactured in Examples 1 to 5 and Comparative Examples 1 to 5 were evaluated by a charge and discharge test as follows. The charge and discharge test of the all-solid secondary batteries was performed in a 45 °C-thermostat.

In the 1^{st} cycle, charging was carried out with a constant current of 3.6 mA/cm² for 12.5 hours until a battery voltage of 3.9 V to 4.25 V was reached. Subsequently, discharging was carried out with a constant current of 0.1C until a battery voltage of 2.5 V was reached.

In the 2^{nd} cycle, charging was carried out with constant current of 0.33C for 12.5 hours until a battery voltage of 3.9 V to 4.25 V was reached. Subsequently, discharging was carried out with a constant current of 0.33C until a battery voltage of 2.5 V was reached.

In the 3^{rd} cycle, charging was carried out with a constant current of 1.0C for 12.5 hours until a battery voltage of 3.9 V to 4.25 V was reached. Subsequently, discharging was carried out with a constant current of 1.0C until a battery voltage of 2.5 V was reached.

Whether or not a short circuit occurred, initial discharge capacity, and high-rate characteristic during the charging and discharging process up to the 3^{rd} cycle are represented in Table 1.

In Table 1, in relation to whether or not a short circuit occurred, O indicates where a short occurred before the 1^{st} cycle was completed, Δ indicates where a short cycle occurred in the 2^{nd} cycle, and × indicated where a short did not occur until after the 3^{rd} cycle was completed.

The initial capacity is a discharge capacity at the 1st cycle. The high-rate characteristic is a percentage of the discharge capacity at the 3^{rd} cycle (1.0C) with respect to the discharge capacity at the 2^{nd} cycle (0.33C).

**Table 1**

| | Whether or not a short circuit occurred | Initial capacity [mAh/g] | High-rate characteristics [%] |
|---|---|---|---|
| Example 1 | × | 190 | 79 |
| Example 2 | × | 190 | 80 |
| Example 3 | × | 198 | 90 |
| Example 4 | × | 199 | 92 |
| Example 5 | × | 195 | 87 |
| Example 6 | × | 195 | 89 |
| Com parative Example 1 | ○ | Not measurable | Not measurable |
| Com parative Example 2 | Δ | 95 | Not measurable |
| Com parative Example 3 | × | 194 | 57 |
| Com parative Example 4 | × | 189 | 75 |
| Com parative Example 5 | × | 189 | 73 |

As shown in Table 1, the all-solid secondary batteries of Examples 1 to 6 exhibited improved cycle characteristics as compared with the all-solid secondary batteries of Comparative Examples 1 to 5.

The all-solid secondary batteries of Examples 3 to 6 including a plurality of multilayer structures were improved in both (e.g., simultaneously) initial capacity and high-rate characteristics as compared with the all-solid state secondary batteries of Examples 1 and 2 including one multilayer structure.

In the all-solid secondary batteries of Comparative Examples 1 and 2 including no gasket, a short occurred during the charging/discharging process.

For the all-solid secondary batteries of Comparative Examples 3 to 5 including a gasket having a single layer structure, it was possible to perform initial charging and discharging, but high-rate characteristics were poor.

For the all-solid secondary batteries of Examples 1 and 6, as measured with SEM images of cross-sections of the all-solid secondary batteries after completion of charging at the first cycle, it was confirmed that a lithium metal layer corresponding to the second anode active material layer was formed between the first anode active material layer and the anode current collector.

As described above, the all-solid secondary battery according to the embodiments can be applied to various portable devices and/or vehicles.

According to an aspect of one or more embodiments, an all-solid secondary battery capable of preventing or reducing a short circuit and having excellent or suitable cycle characteristics can be provided.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (e.g., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

It should be understood that the embodiments described herein should be considered in a descriptive sense only and not for purposes of limitation.

## Claims

1. An all-solid secondary battery (1) comprising:
a cathode layer (10);
an anode layer (20);
a solid electrolyte layer (30) between the cathode layer (10) and the anode layer (20);
and an inactive member (40) on a thickness side of the cathode layer (10),
wherein the cathode layer (10) comprises a cathode current collector (11) and a cathode active material layer (12) on the cathode current collector (11),
the anode layer (20) comprises an anode current collector (21) and a first anode active material layer (22) on the anode current collector (21), and
the inactive member (40) comprises a multilayer structure (41), and the multilayer structure (41) comprises an adhesive layer (42) and a support layer (43).

2. The all-solid secondary battery of claim 1, wherein the inactive member (40) comprises 1 to 100 of the multilayer structure (41).

3. The all-solid secondary battery of claim 1 or 2, wherein a thickness of the adhesive layer (42) or a thickness of the support layer (42) is 90% or less of a total thickness of the multilayer structure.

4. The all-solid secondary battery of one of the preceding claims, wherein a thickness of the inactive member (40) is equal to or smaller than a thickness of the cathode layer (10).

5. The all-solid secondary battery of claim 4, wherein the thickness of the inactive member (40) is 30 % to 100 % of the thickness of the cathode layer (10).

6. The all-solid secondary battery of one of the preceding claims, wherein the adhesive layer (42) comprises an organic material, and the support layer (43) comprises an organic material and/or an inorganic material.

7. The all-solid secondary battery of claim 6, wherein the adhesive layer (42) comprises a curable polymer.

8. The all-solid secondary battery of one of the preceding claims, wherein the support layer (43) comprises at least one selected from paper, an insulating polymer, an ion-conductive polymer, an insulating inorganic material, an oxide-based solid electrolyte, and a sulfide-based solid electrolyte.

9. The all-solid secondary battery of one of the preceding claims, wherein a density of the support layer (43) is in a range of 10 % to 200 % of a density of the cathode active material in the cathode active material layer.

10. The all-solid secondary battery of one of the preceding claims, wherein the inactive member (40) is on all thickness sides of the cathode layer (10) and contacts the solid electrolyte layer (30).

11. The all-solid secondary battery of one of the preceding claims, wherein the inactive member (40) extends to a distal end portion of the solid electrolyte layer (30) and is spatially separated from the first anode active material layer (22).

12. The all-solid secondary battery of one of the preceding claims, wherein a width of the inactive member (40) extending from the thickness side of the cathode layer (10) to a distal end portion of the solid electrolyte layer (30) is 1 % to 30 % of a width of the cathode layer (10).

13. The all-solid secondary battery of one of the preceding claims, wherein an area of the cathode layer (10) is smaller than an area of the solid electrolyte layer (30) contacting the cathode layer (10), and
the inactive member (40) is on the thickness side of the cathode layer (10) to make up a difference in area between the cathode layer (10) and the solid electrolyte layer (30).

14. The all-solid secondary battery of one of the preceding claims, wherein the solid electrolyte layer (30) comprises a sulfide-based solid electrolyte, and
the sulfide-based solid electrolyte is at least one selected from Li₂S-P₂S₅, Li₂S-P₂S₅-LiX (wherein X is a halogen element), Li₂S-P₂S₅-Li₂O, Li₂S-P₂S₅-Li₂O-Lil, Li₂S-SiS₂, Li₂S-SiS₂-Lil, Li₂S-SiS₂-LiBr, Li₂S-SiS₂-LiCl, Li₂S-SiS₂-B₂S₃-Lil, Li₂S-SiS₂-P₂S₅-Lil, Li₂S-B₂S₃, Li₂S-P₂S₅-ZₘSₙ (wherein m and n are each an positive number, and Z is one of Ge, Zn, and Ga), Li₂S-GeS₂, Li₂S-SiS₂-Li₃PO₄, Li₂S-SiS₂-LiₚMO_{q} (wherein p and q are each an positive number and M is one of P, Si, Ge, B, Al, Ga, and In), Li₇₋ₓPS₆₋ₓClₓ (wherein 0≤x≤2), Li₇₋ₓPS₆₋ₓBrₓ (wherein in0≤x≤2), and Li₇₋ₓPS₆₋ₓIₓ (where 0≤x≤2).

15. The all-solid secondary battery of claim 14, wherein the sulfide-based solid electrolyte is an argyrodite-type solid electrolyte comprising at least one selected from Li₆PS₅Cl, Li₆PS₅Br, and Li₆PS₅I, and
a density of the argyrodite-type solid electrolyte is about 1.5 g/cc to about 2.0 g/cc.
